(19) Europäisches Patentamt
European Patent Office
Office européen des brevets

(11) EP 4 132 219 A1

(12) EUROPEAN PATENT APPLICATION
published in accordance with Art. 153(4) EPC

(43) Date of publication:
08.02.2023 Bulletin 2023/06

(21) Application number: 21899719.5

(22) Date of filing: 11.10.2021

(51) International Patent Classification (IPC):
H05B 1/00 (1968.09)

(52) Cooperative Patent Classification (CPC):
Y02B 30/00

(86) International application number:
PCT/CN2021/122984

(87) International publication number:
WO 2022/116685 (09.06.2022 Gazette 2022/23)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 03.12.2020 CN 202011405111

(71) Applicant: SUZHOU JERNANO CARBON CO., LTD.
Suzhou, Jiangsu 215000 (CN)

(72) Inventors:
• YANG, Qunzhen
  Suzhou, Jiangsu 215000 (CN)
• ZENG, Li
  Suzhou, Jiangsu 215000 (CN)
• LYU, Wei
  Suzhou, Jiangsu 215000 (CN)

(74) Representative: Corradini, Corrado et al
Ing. C. Corradini & C. S.r.l.
Via Dante Alighieri 4
42121 Reggio Emilia (IT)

(54) ELECTRIC HEATING SYSTEM AND HEATING METHOD CAPABLE OF ADAPTING TO VARIOUS VOLTAGES

(57) Disclosed are an electric heating system and heating method capable of adapting to various voltages. The electric heating system comprises: a plurality of heating bodies, a controller, a variable-frequency charging element and at least one electric connector, wherein the controller is electrically connected to the plurality of heating bodies; the plurality of heating bodies are arranged in parallel; and the controller is further electrically connected to the at least one electric connector by means of the variable-frequency charging element, such that the electric connector can be connected to power sources of different rated powers and can supply power to the plurality of heating bodies according to a preset power-on logic. According to the electric heating system and heating method capable of adapting to various voltages provided in the embodiments of the present application, a specific heating logic is used, such that that electric heating system can adapt to inputs of various voltage types and achieve multi-chip independent temperature control, and can adapt to all external power sources so as to ensure that 10W, 18W and 40W external power sources can all operate at rated power.

FIG. 1

EP 4 132 219 A1

## Description

### CROSS REFERENCE TO RELATED APPLICATIONS

This application claims priority to Chinese Patent Application No. 202011405111.2, filed with CNIPA on December 3, 2020, entitled as "ELECTRIC HEATING SYSTEM AND HEATING METHOD CAPABLE OF ADAPTING TO VARIOUS VOLTAGES", the entire content of which is incorporated herein in its entirety.

### TECHNICAL FIELD

The present disclosure relates to the technical field of electric heating. The present disclosure relates to an electronic heating system, and more particularly relates to an electric heating system capable of adapting to various voltages and a heating method capable of adapting to various voltages.

### BACKGROUND

With the widespread popularity of smart heating clothing products on the market, user demand for warming speed and heating area is increasing. Nevertheless, rated voltage and rated current output of a conventional power bank currently on the market is 5V/2A. Due to the limitation of power output capacity of the power source for the heating system, the heating area and the warming speed of the heating system cannot satisfy consumer requirements for heating experience.

### SUMMARY

The present disclosure provides an electric heating system and a heating method capable of adapting to various voltages to overcome the deficiencies in the relevant technology.
The technical solution provided by the present disclosure is as follows.
An electric heating system capable of adapting to various voltages is provided according to an embodiment of the present disclosure. The system includes: multiple heating elements, a controller, and at least one electric connector. The controller is electrically connected to the multiple heating elements, the multiple heating elements are arranged in parallel. The controller is electrically connected to at least one electric connector. When an electric connector is connected to an external power source, the controller enables, according to preset power-on logic, the external power source to distribute power to the multiple heating elements, preventing an output power of the external power source from exceeding the rated power of the external power source.
An electric heating method capable of adapting to various voltages is also provided according to an embodiment of the present disclosure. The method may include: providing the electric heating system capable of adapting to various voltages and connecting the electric connector electrically to an external power source; supplying electricity and distributing power to the multiple heating elements according to a preset power-on logic at least based on at least one of an amount of a rated power of the external power source or an area of each heating element, such that each heating element generates heat independently and an output power of the external power source does not exceed the rated power of the external power source.
Comparing to prior arts, the present disclosure at least have the following advantages.
1) By adopting a specific heating logic, the electric heating system and the heating method capable of adapting to various voltages according to embodiments of the present disclosure are applicable to various types of voltage inputs, and independent temperature control for multiple pads is available.
2) The specific heating logic provided by the present disclosure enables adaption to all types of external power sources so as to ensure that 10W, 18W and 40W external power sources can all operate at respective rated powers.
3) With the specific heating logic provided by the present disclosure, the external power source may not operate over the rated power because of the changes in input voltage.

### BRIEF DESCRIPTION OF THE DRAWINGS

FIG. 1 is a schematic structural diagram of an electric heating system capable of adapting to various voltages according to an embodiment of the present disclosure;
FIG. 2 schematically illustrates a power-on logic of an electric heating system capable of adapting to various voltages according to an embodiment of the present disclosure;

FIG. 3 schematically illustrates a power-on logic of an electric heating system capable of adapting to various voltages according to another embodiment of the present disclosure;

FIG. 4 schematically illustrates a power-on logic of an electric heating system capable of adapting to various voltages according to still another embodiment of the present disclosure; and

FIG. 5 schematically illustrates a power-on logic of an electric heating system capable of adapting to various voltages according to further another embodiment of the present disclosure.

## DETAILED DESCRIPTION OF THE EMBODIMENTS

Inventors of the present application have devoted extensive studies and practices to provide technical solution of the present disclosure. The technical solution and implementation and principle thereof are further explained as follows.

An electric heating system and a heating method capable of adapting to various voltages are provided according to embodiments of the present disclosure. Through fast charge invoking technique, 20V/2A or 9V/2A high-voltage rated output of an external power source is invoked to perform heating, thereby achieving fast warming and large-area heating. Furthermore, a specific heating logic in the present disclosure is compatible with a 5V/2A power supply system on the market.

An electric heating system capable of adapting to various voltages is provided according to an embodiment of the present disclosure, which may include multiple heating elements, a controller and at least one electric connector. The controller is electrically connected to the multiple heating elements, and the multiple heating elements are arranged in parallel. The controller may be electrically connected to at least one electric connector. When an electric connector is connected to an external power source, the controller enables, according to preset power-on logic, the external power source to distribute power to the multiple heating elements, preventing an output power of the external power source from exceeding the rated power of the external power source.

Optionally, each of the multiple heating elements may be electrically connected to the controller independently, and may independently generate heat under the control of the controller.

Optionally, at least one of heating temperature or heating time of the multiple heating elements may be identical or different.

Optionally, the controller may include a fast charge protocol chip, a single-chip microcomputer and multiple control circuit modules. The single-chip microcomputer is connected to the fast charge protocol chip and is connected to the multiple control circuit modules respectively. The multiple control circuit modules are connected to the multiple heating elements respectively.

Optionally, the multiple control circuit modules may be configured to independently control current or voltage outputs of the multiple heating elements, and the multiple heating elements may be configured to feed temperature back to the single-chip microcontroller.

Optionally, the electric heating system capable of adapting to various voltages may include multiple heating units. The controller may be connected to the multiple heating units respectively, where each heating unit may include one or more heating elements.

Optionally, the heating element may include an electrothermal film.

Optionally, the electric heating system capable of adapting to various voltages may include multiple electric connectors. The electric connectors may include a USB connector.

Optionally, the electric heating system capable of adapting to various voltages may further include multiple temperature sensors. The multiple temperature sensors may be connected to the multiple heating elements respectively, and may each be connected to the controller.

An electric heating method capable of adapting to various voltages is further provided according to an embodiment of the present disclosure, which includes:

providing the electric heating system capable of adapting to various voltages, and connecting the electric connector electrically to an external power source;

supplying electricity and distributing power to the multiple heating elements according to a preset power-on logic at least based on an amount of rated power of the external power source and/or an area of each heating element, such that each heating element generates heat independently, and an output power of the external power source does not exceed the rated power of the external power source.

Optionally, the electric heating method capable of adapting to various voltages may include: successively and periodically supplying electricity to the multiple heating elements to enable the multiple heating elements to generate heat successively and periodically; or, simultaneously supplying electricity to the multiple heating elements to enable the multiple heating elements to generate heat simultaneously, where electricity may be supplied to the multiple heating elements at identical time or at different time.

Optionally, a sum of currents flowing through the multiple heating elements does not exceed a rated current of the power source.

Optionally, the rated current of the power source is 2A, and a rated voltage of the power source is 5-20V.

In some specific implementations, in case that the voltage of the external power source is 20V, a proportion of a heating duration of a respective heating element to one electricity supplying period is $t_n = S_n/(S_1 + S_2 ... + S_n)$, a heating power of a respective heating element is: $W_n = P_n \times t_n = U^2 \times t_n/R_n$. Here, n is the quantity of heating elements, n is greater than or equal to 2, $S_n$ is an area of the heating element, $W_n$ is the heating power of the heating element, $P_n$ is a rated power of the heating element, $R_n$ is a resistance of the heating element.

In some specific implementations, in case that the voltage of the external power source is 9V, a proportion of a heating duration of a respective heating element to one electricity supplying period is $t_n = (2 \times S_n)/(S_1 + S_2 ... + S_n)$, a heating power of a respective heating element is: $W_n = P_n \times t_n = U^2 \times t_n/R_n$. Here, n is the quantity of heating elements, n is greater than or equal to 2, $S_n$ is the area of the heating element, $W_n$ is the heating power of the heating element, $P_n$ is a rated power of the heating element, $R_n$ is a resistance of the heating element.

In some specific implementations, in case that the voltage of the external power source is 5V, a proportion of a heating duration of a respective heating element to one electricity supplying period is $t_n = 1$, a heating power of a respective heating element is: $W_n = P_n \times t_n = U^2 \times t_n/R_n$. Here, n is the number of heating elements, n is greater than or equal to 2, $S_n$ is an area of the heating element, $W_n$ is the heating power of the heating element, $P_n$ is a rated power of the heating element, $R_n$ is a resistance of the heating element.

Hereinafter the technical solution, and implementation and principle thereof are optionally described in detail in conjunction with the drawings and embodiments.

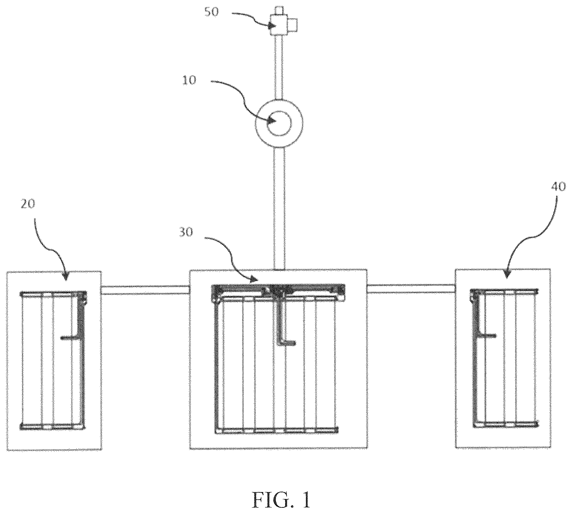

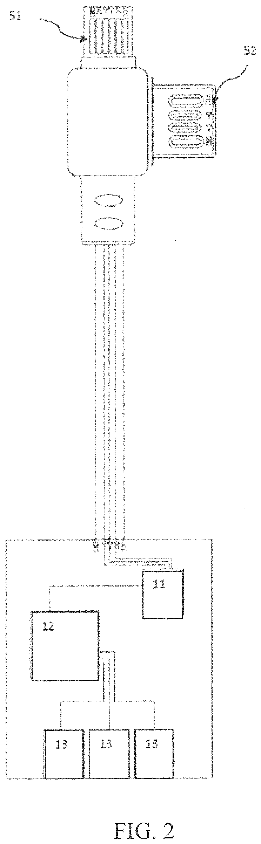

Referring to FIG. 1 and FIG. 2, an electric heating system capable of adapting to various voltages includes three heating elements 20, 30, 40, a controller 10 and an electric connector 50. The controller 10 is connected to the three heating elements 20, 30 and 40 respectively and the three heating elements 20, 30 and 40 are arranged in parallel.

In addition, the controller 10 may be connected to the electric connector 50. When the electric connector 50 is connected to an external power source, the controller 10 may enable, according to preset power-on logic, the external power source to distribute power to the three heating elements 20, 30 and 40, such that an output power of the external power source does not exceed a rated power of the external power source. Each of the three heating elements 20, 30 and 40 may be independently electrically connected to the controller 10, and may independently generate heat under the control of the controller 10.

Specifically, the heating elements 20, 30, 40 may include electrothermal films, the electric connector 50 includes a USB interface 51 and a Type-C interface 52.

Specifically, the controller 10 may include: a fast charge protocol chip 11, a single-chip microcomputer 12 and three control circuit modules 13. The single-chip microcomputer 12 is connected to the fast charge protocol chip 11 and each of the three control circuit modules 13. The three control circuit modules 13 are respectively connected to the three heating elements 20, 30 and 40.

Specifically, the single-chip microcomputer 12 in the controller 10 communicates with the external power source through the fast charge protocol chip 11 and via D+, D- signal pins of the USB interface 51 or a configuration channel (CC) pin of the Type-C interface 52. According to the standard communication protocol PD 2.0 in the fast charge industry, the USB interface 51 enables a power bank to output 9V/5V voltage for heating elements to generate heat. According to a CC interface communication protocol, the Type-C interface 52 may enable a power bank to output 20V/9V/5V voltage for heating elements to generate heat. Meanwhile, multiple heating control circuit modules 13, configured internally within the controller 10, may independently control the voltage or current output to respective heating elements, and each heating element feeds back a temperature to the single-chip microcomputer, thereby achieving independent temperature control for each heating element. In addition, the heating element is heated according to a specific heating logic, which achieves excellent heating experience at 20V, great heating experience at 9V and good heating experience at 5V.

Specifically, the electric heating system capable of adapting to various voltages may further include: multiple temperature sensors. The multiple temperature sensors are connected to the multiple heating elements respectively, and each are connected to the controller.

An electric heating system capable of adapting to various voltages is provided according to an embodiment of the present disclosure, which supports PD 3.0 fast charging function. Conventional power bank on the market supports Type-A output and Type-C interface output. If a power bank supports fast charging function, using the electric heating system capable of adapting to various voltages shown in FIG. 1, a 20V&9V&5V power source may supply electricity to the heating system via a Type-C electric connector, and a 9V/5V power source may supply electricity to the heating system via a Type-A electric connector (namely the foregoing USB interface).

The rated current is always 2A when the conventional power bank outputs voltage of 20V or 9V or 5V. Hence, the resistances of the heating elements 20, 30, 40 need to be controlled during design to guarantee that an output current of the power bank does not exceed 2A while fully utilizing the power of the power bank. Otherwise, it may damage the power bank or cause other harmful phenomena.

In some specific implementations, in case that the voltage of the external power source is 20V, a proportion of a heating duration of a respective heating element to one electricity supplying period is $t_n = S_n/(S_1 + S_2 \ldots + S_n)$, a heating power of a respective heating element is:

$$W_n = P_n \times t_n = U^2 \times \frac{t_n}{R_n} = 20^2 \times \frac{t_n}{10} = 40 t_n$$

; a total heating power of multiple heating elements can be obtained by:

$$\sum w = W_1 + W_2 + W_3 + \cdots + W_n = 40 \times \frac{S_1 + S_2 + S_3 + \cdots + S_n}{S_1 + S_2 + S_3 + \cdots + S_n} = 40W$$

where n is the quantity of heating elements, n is greater than or equal to 2, $S_n$ is an area of the heating element, $W_n$ is the heating power of the heating element, $P_n$ is a rated power of the heating element, $R_n$ is a resistance of the heating element. Because the current is 2A at most when the conventional power bank outputs a voltage of 20V, i.e., the power is 40W, it can be guaranteed, according to aforementioned heating logic, that the power output of the power bank at the supply of 20V is fully utilized while the current may not exceed 2A.

In some specific implementations, in case that the voltage of the external power source is 9V, a proportion of a heating duration of a respective heating element to one electricity supplying period is $t_n = (2 \times S_n)/(S_1 + S_2 \ldots + S_n)$, a heating power of a respective heating element is:

$$W_n = P_n \times t_n = U^2 \times \frac{t_n}{R_n} = 9^2 \times \frac{t_n}{10} = 8.1 t_n$$

, a total heating power of multiple heating elements can be obtained by:

$$\sum w = W_1 + W_2 + W_3 + \cdots + W_n = 8.1 \times \frac{S_1 + S_2 + S_3 + \cdots + S_n}{S_1 + S_2 + S_3 + \cdots + S_n} = 8.1W$$

where n is the quantity of heating elements, n is greater than or equal to 2, $S_n$ is an area of the heating element, $W_n$ is the heating power of the heating element, $P_n$ is a rated power of the heating element, $R_n$ is a resistance of the heating element. Because the current is 2A at most when the conventional power bank outputs a voltage of 9V, i.e., the power is 18W, it can be guaranteed, according to aforementioned heating logic, that the power output of the power bank at the supply of 20V is fully utilized while the current may not exceed 2A.

In some specific implementations, in case that the voltage of the external power source is 5V, a proportion of a heating duration of a respective heating element to one electricity supplying period is $t_n = 1$, a heating power of a respective heating element is:

$$W_n = P_n \times t_n = U^2 \times \frac{t_n}{R_n} = 5^2 \times \frac{t_n}{10} = 2.5 t_n$$

; a total heating power of multiple heating elements can be obtained by:

$$\sum w = W_1 + W_2 + W_3 + \cdots + W_n = 2.5 \times \frac{S_1 + S_2 + S_3 + \cdots + S_n}{S_1 + S_2 + S_3 + \cdots + S_n} = 2.5nW$$

where n is the quantity of heating elements, n is greater than or equal to 2, $S_n$ is an area of the heating element, $W_n$ is the heating power of the heating element, $P_n$ is a rated power of the heating element, $R_n$ is a resistance of the heating element.

Specifically, it needs to be ensured that the total current is to be smaller than the rated current 2A of the power bank when fully utilizing the power bank at high power to generate heat, thereby avoiding damage or other harmful effects on the power bank operated above the rated power. Therefore, the total resistance of the heating element 20, the heating element 30 and the heating element 40 needs to be greater than 10R.

Specifically, it is assumed that an area of the heating element 30 (may be defined as heating pad 2, the same below) is twice as large as each of an area of the heating element 20 (may be defined as heating pad 1, the same below) and an area of the heating element 40 (may be defined as heating pad 3, the same below). To achieve the same heating effect, 1/2 of the power output by the power bank (namely the external power source, the same below) needs to be applied on the heating pad 2, 1/4 of the power needs to be applied on the heating pad 1 and 1/4 of the power needs to be applied on the heating pad 3.

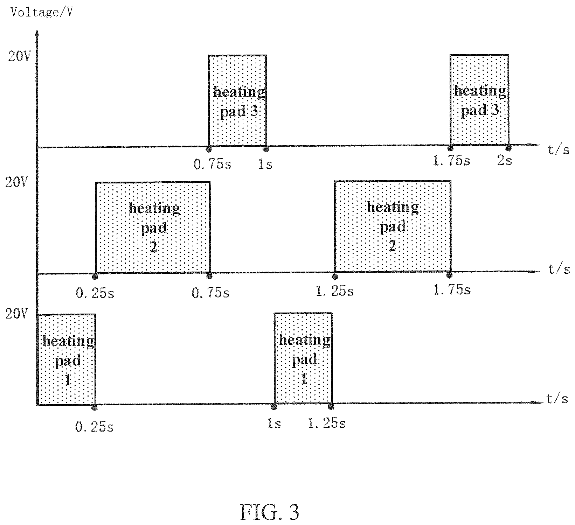

Another embodiment of the present disclosure is described below. Referring to FIG. 3, in case of using a power bank having a rated voltage of 20V and a rated current of 2A as an external power source, the power-on logic of the electric heating system capable of adapting to various voltages is as follows: the heating pad 1 generates heat in 0-0.25s, the heating pad 2 generates heat in 0.25-0.75s, the heating pad 3 generates heat in 0.75s-1s, and the above circulation is repeated. In this way, the 40W rated power of the power bank can be fully utilized without causing overcurrent phenomenon.

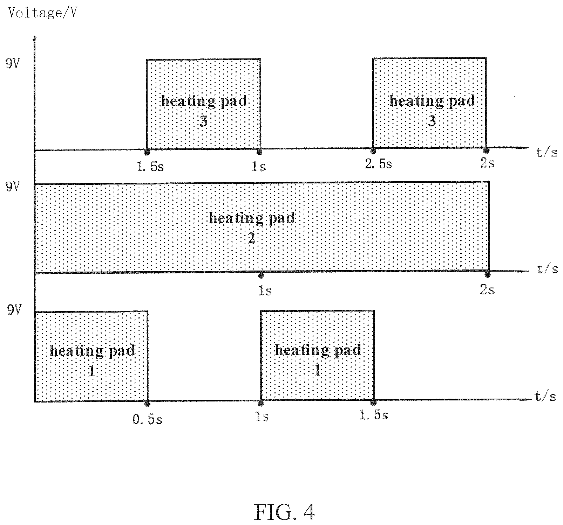

Still another embodiment of the present disclosure is described below. Referring to FIG. 4, in case of using a power bank having a rated voltage of 9V and a rated current of 2A as an external power source, the power-on logic of the electric heating system capable of adapting to various voltages is as follows: the heating pad 1 generates heat in 0-0.5s, the heating pad 2 generates heat in 0-1s, the heating pad 3 generates heat in 0.5-1s, and the above circulation is repeated. In this way, the 18W rated power of the power bank can be fully utilized without causing overcurrent phenomenon.

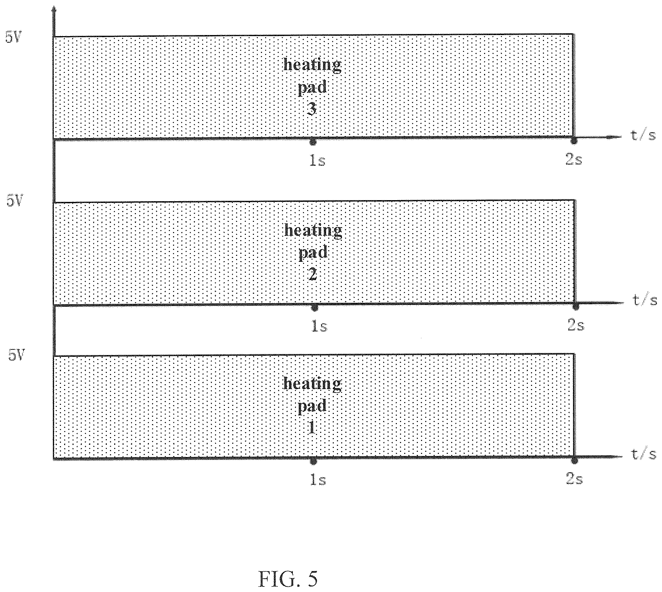

Further another embodiment of the present disclosure is described below. Referring to FIG. 5, in case of using a power bank having a rated voltage of 5V and a rated current of 2A as an external power source, since the power density of the heating elements is relatively low under the supply of voltage of 5V, the heating pads 1,2,3 all generate heat at full power. In this way, a total power is 7.5W, thereby fully utilizing the power supplied by the power bank.

By adopting a specific heating logic, the electric heating system and the heating method capable of adapting to various voltages according to embodiments of the present disclosure are applicable to various types of voltage inputs, and independent temperature control for multiple pads is available.

Furthermore, the specific heating logic of present disclosure enables adaption to all types of external power sources so as to ensure that 10W, 18W and 40W external power sources can all operate at respective rated powers.

In addition, with the specific heating logic provided by the present disclosure, the external power source may not operate above the rated power because of changes in input voltage.

It should be understood that the aforementioned embodiments are only for describing the technical concept and features of the present disclosure, intending to enable those skilled in the art to understand and implement the content of the present disclosure, rather than to limit the protection scope of the present disclosure. Any equivalent changes or modifications made according to the spirit of this disclosure shall all fall within the protection scope of this disclosure.

Industrial Practicality

The present disclosure provides an electric heating system and a heating method capable of adapting to various voltages. The electric heating system includes: multiple heating elements, a controller, a variable-frequency charging element and at least one electric connector. The controller is electrically connected to the multiple heating elements, the multiple heating elements are arranged in parallel. The controller is electrically connected to at least one electric connector via the variable-frequency charging element, which allows the electric connector to connect to power sources with different rated powers and delivers electricity to the multiple heating elements according to preset power-on logic. By adopting a specific heating logic, the electric heating system and the heating method capable of adapting to various voltages according to embodiments of the present disclosure are applicable to various types of voltage inputs, and independent temperature control for multiple pads is available. The specific heating logic of present disclosure enables adaption to all types of external power sources so as to ensure that 10W, 18W and 40W external power sources can all operate at respective rated powers.

In addition, it should be understood that the electric heating system and heating method capable of adapting to various voltages in the present disclosure are reproducible and can be applied in various industrial application. For example, the electric heating system and heating method capable of adapting to various voltages in the present disclosure can be applied to any components needing to be heated.

**Claims**

1. An electric heating system capable of adapting to various voltages, comprising:

   a plurality of heating elements,
   a controller, and
   at least one electric connector;
   wherein the controller is electrically connected to the plurality of heating elements, the plurality of heating elements being arranged in parallel; and
   wherein the controller is electrically connected to the at least one electric connector, and in a case that an electric connector in the at least one electric connector is connected to an external power source, the controller enables, according to a preset power-on logic, the external power source to distribute power to the plurality of heating elements, and prevents an output power of the external power source from exceeding a rated power of the external power source.

2. The electric heating system capable of adapting to various voltages according to claim 1, wherein each of the plurality of heating elements is electrically connected to the controller independently, and is able to independently generate heat under control of the controller.

3. The electric heating system capable of adapting to various voltages according to claim 1 or claim 2, wherein at least one of heating temperature or heating time of the plurality of heating elements is identical or different.

4. The electric heating system capable of adapting to various voltages according to any one of claims 1 to 3, wherein the controller comprises a fast charge protocol chip, a single-chip microcomputer and a plurality of control circuit modules; the single-chip microcomputer is connected to the fast charge protocol chip and is connected to the plurality of control circuit modules respectively; and the plurality of control circuit modules are connected to the plurality of heating elements respectively.

5. The electric heating system capable of adapting to various voltages according to claim 4, wherein the plurality of control circuit modules are configured to independently control current or voltage outputs of the plurality of heating elements, and the plurality of heating elements are configured to feed temperature back to the single-chip microcontroller.

6. The electric heating system capable of adapting to various voltages according to any one of claims 1 to 5, comprising a plurality of heating units, wherein the controller is connected the plurality of heating units respectively, each heating unit comprising one or more heating elements.

7. The electric heating system capable of adapting to various voltages according to any one of claims 1 to 6, wherein the heating element comprises an electrothermal film.

8. The electric heating system capable of adapting to various voltages according to any one of claims 1 to 7, comprising a plurality of electric connectors which comprise a USB connector.

9. The electric heating system capable of adapting to various voltages according to any one of claims 1 to 8, further comprising a plurality of temperature sensors, wherein the plurality of temperature sensors are connected to the plurality of heating elements respectively and are each connected to the controller.

10. An electric heating method capable of adapting to various voltages, comprising:

   providing the electric heating system capable of adapting to various voltages of any one of claims 1 to 9, and connecting the electric connector electrically to an external power source;
   supplying electricity and distributing power to the plurality of heating elements according to a preset power-on logic at least based on at least one of an amount of a rated power of the external power source or an area of each heating element, such that each heating element generates heat independently and an output power of the external power source does not exceed the rated power of the external power source.

11. The electric heating method capable of adapting to various voltages according to claim 10, comprising:

   successively and periodically supplying electricity to the plurality of heating elements to enable the plurality of heating elements to generate heat periodically, or
   simultaneously supplying electricity to the plurality of heating elements to enable the plurality of heating elements to generate heat simultaneously,
   wherein electricity is supplied to the plurality of heating elements at identical time or at different time;
   preferably, a sum of currents flowing through the plurality of heating elements does not exceed a rated current of the external power source;
   preferably, the rated current of the external power source is 2A and a rated voltage of the external power source ranges from 5V to 20V;
   preferably, in a case that the voltage of the external power source is 20V, a proportion of a heating duration of a respective heating element to one electricity supplying period is $t_n = S_n/(S_1 + S_2 \ldots + S_n)$, a heating power of a respective heating element is:
   $W_n = P_n \times t_n = U^2 \times t_n/R_n$, where n is the quantity of heating elements, n is greater than or equal to 2, $S_n$ is

an area of the heating element, $W_n$ is the heating power of the heating element, $P_n$ is a rated power of the heating element, $R_n$ is a resistance of the heating element;

preferably, in a case that the voltage of the external power source is 9V, a proportion of a heating duration of a respective heating element to one electricity supplying period is $t_n = (2 \times S_n)/(S_1 + S_2 \dots + S_n)$, a heating power of a respective heating element is:

$W_n = P_n \times t_n = U^2 \times t_n/R_n$ , where n is the quantity of heating elements and n is greater than or equal to 2, $S_n$ is an area of the heating element, $W_n$ is the heating power of the heating element, $P_n$ is a rated power of the heating element, $R_n$ is a resistance of the heating element;

preferably, in a case that the voltage of the external power source is 5V, a proportion of a heating duration of a respective heating element to one electricity supplying period is $t_n = 1$, a heating power of a respective heating element is:

$W_n = P_n \times t_n = U^2 \times t_n/R_n$ , where n is the quantity of heating elements, n is greater than or equal to 2, $S_n$ is an area of the heating element, $W_n$ is the heating power of the heating element, $P_n$ is a rated power of the heating element, $R_n$ is a resistance of the heating element.

FIG. 1

FIG. 2

FIG. 3

FIG. 4

FIG. 5

## INTERNATIONAL SEARCH REPORT

| International application No. |
|---|
| **PCT/CN2021/122984** |

**A. CLASSIFICATION OF SUBJECT MATTER**

H05B 1/00(2006.01)i

According to International Patent Classification (IPC) or to both national classification and IPC

**B. FIELDS SEARCHED**

Minimum documentation searched (classification system followed by classification symbols)

H05B

Documentation searched other than minimum documentation to the extent that such documents are included in the fields searched

Electronic data base consulted during the international search (name of data base and, where practicable, search terms used)

CNKI, CNPAT, WPI, EPODOC: 功率, 适配, 分配, 调节, 多电压, 接头, 接口, 加热, 多个, 发热体, 策略, 逻辑, 5V, 9V, 20V, USB, TYPE, ADAPT+, MULTI+, VOLTAGE, POWER, HEAT+, JOINT

**C. DOCUMENTS CONSIDERED TO BE RELEVANT**

| Category* | Citation of document, with indication, where appropriate, of the relevant passages | Relevant to claim No. |
|---|---|---|
| PX | CN 112584561 A (SUZHOU JERNANO TECHNOLOGY CO., LTD.) 30 March 2021 (2021-03-30) <br> claims 1-10 | 1-4, 6-11 |
| Y | CN 204217136 U (LIU, Guowen) 18 March 2015 (2015-03-18) <br> description, paragraphs 0014-0015, figure 1 | 1-11 |
| Y | CN 208571657 U (ZHUHAI ISMARTWARE TECHNOLOGY CO., LTD.) 01 March 2019 (2019-03-01) <br> description, paragraphs 0021-0031, and figures 1-3 | 1-11 |
| Y | CN 111867164 A (WANG, Quanqiang) 30 October 2020 (2020-10-30) <br> description, paragraphs 0022-0027, figure 1 | 8-9 |
| A | CN 102711296 A (SHANGHAI NAXIONG ELECTRICAL APPLIANCE TECHNOLOGY CO., LTD.) 03 October 2012 (2012-10-03) <br> entire document | 1-11 |
| A | CN 206148995 U (ZHOU, Jianlong) 03 May 2017 (2017-05-03) <br> entire document | 1-11 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 December 2021** | **13 January 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/122984**

**C. DOCUMENTS CONSIDERED TO BE RELEVANT**

| Category* | Citation of document, with indication, where appropriate, of the relevant passages | Relevant to claim No. |
|---|---|---|
| A | CN 110800183 A (OPPO GUANGDONG MOBILE COMMUNICATIONS CO., LTD.) 14 February 2020 (2020-02-14) entire document | 1-11 |
| A | US 2017311388 A1 (HSU, Wei) 26 October 2017 (2017-10-26) entire document | 1-11 |
| A | KR 101374395 B1 (NEWZIRO CO., LTD.) 17 March 2014 (2014-03-17) entire document | 1-11 |

Form PCT/ISA/210 (second sheet) (January 2015)

**INTERNATIONAL SEARCH REPORT**
Information on patent family members

International application No.

**PCT/CN2021/122984**

| Patent document cited in search report | | | Publication date (day/month/year) | Patent family member(s) | | | Publication date (day/month/year) |
|---|---|---|---|---|---|---|---|
| CN | 112584561 | A | 30 March 2021 | None | | | |
| CN | 204217136 | U | 18 March 2015 | None | | | |
| CN | 208571657 | U | 01 March 2019 | None | | | |
| CN | 111867164 | A | 30 October 2020 | None | | | |
| CN | 102711296 | A | 03 October 2012 | None | | | |
| CN | 206148995 | U | 03 May 2017 | None | | | |
| CN | 110800183 | A | 14 February 2020 | KR | 20200079232 | A | 02 July 2020 |
| | | | | EP | 3706283 | A1 | 09 September 2020 |
| | | | | EP | 3706283 | A4 | 30 December 2020 |
| | | | | WO | 2020124590 | A1 | 25 June 2020 |
| | | | | US | 2020203964 | A1 | 25 June 2020 |
| | | | | AU | 2018432187 | A1 | 09 July 2020 |
| | | | | AU | 2018432187 | B2 | 23 September 2021 |
| | | | | JP | 2021511000 | A | 30 April 2021 |
| | | | | JP | 6955624 | B2 | 27 October 2021 |
| | | | | IN | 202017002959 | A | 04 September 2020 |
| US | 2017311388 | A1 | 26 October 2017 | None | | | |
| KR | 101374395 | B1 | 17 March 2014 | None | | | |

Form PCT/ISA/210 (patent family annex) (January 2015)

**REFERENCES CITED IN THE DESCRIPTION**

**Patent documents cited in the description**

- CN 202011405111